# EUROPEAN PATENT APPLICATION

(11) **EP 1 912 129 A2**
(43) Date of publication of application: **16.04.2008**
(21) Application number: 07118219.0
(22) Date of filing: 10.10.2007
(51) Int. Cl.: G06F 17/30

(54) **Method of generating and playing playback file and apparatus using the same**

(30) Priority: 11.10.2006 KR 20060098992
(71) Applicant: Posdata Co., Ltd., Seongnam-si, Kyeonggi-do 463-050 (KR)
(72) Inventor: Cho, Sung-Bong, 138-838, Seoul (KR); Kim, Hyo-Hyun, 462-801, Gyeonggi-do (KR); Han, Kil-Pyo, 448-120, Gyeonggi-do (KR)
(74) Representative: Viering, Jentschura & Partner

(57) **Abstract**

A method of generating and playing a playback file including a multimedia data and a player, includes steps of: (A-1) generating the playback file by sequentially storing a loader for loading the player, the multimedia data, and the player for playing the multimedia data; and (A-2) executing the player using the loader, loading the multimedia data on the player, and playing the playback file.

## Description

This application claims the benefit of Korean Patent Application No. 2006-0098992, filed on October 11, 2006, which is hereby incorporated by reference in its entirety.

### TECHNICAL FIELD

The present application relates to a method of generating and playing a playback file, and more particularly, to a method of generating and playing a playback file having an upgradeable player and an apparatus using the same.

### BACKGROUND

A separate player program is required to play a multimedia data having an extension such as mp3, avi and mpeg. For example, moving image or music may be compressed and stored as a playback file having one of mp3, avi and mpeg formats. The playback file is played by a media player having a codec corresponding to the format of the playback file to be supplied to a user as a video or a sound.

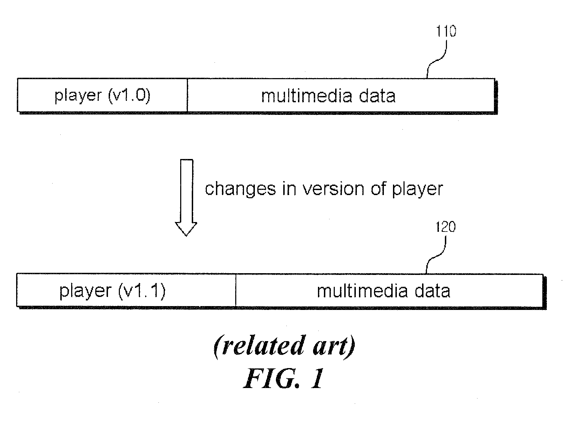

Recently, a playback file having a structure playable without a separate player program has been researched and developed. FIG. 1 is a view showing a structure of a playback file according to the related art. In FIG. 1, each of first and second playback files 110 and 120 has a structure where a player is arranged prior to a multimedia data. When the playback file is played, the player of the playback file is immediately executed and then the multimedia data is loaded on the player. As a result, the multimedia data of the playback file is supplied to a user as an image (video) or a sound (audio).

In the playback file of FIG. 1, however, there exists a disadvantage such that functions of the player are fixed when the playback file is played. For example, a version of the player may be changed due to change or addition in a codec, a video control and sound equalizer. To play the multimedia data in an upgraded player, a new playback file should be generated as a whole. As shown in FIG. 1, when a version of the player is changed from v1.0 to v1.1, the second playback file 120 is generated instead of partially changing the first playback file 110. The partial change of the first playback file 110 such that the multimedia data is moved and a new player having a version of v1.1 is added prior to the moved multimedia data does not satisfy the present protocol required to play the playback file.

### SUMMARY

A method of generating and playing a playback file having a upgradeable player and an apparatus using the method are described.

A method of generating and playing a playback file including a multimedia data and a player, includes steps of: (A-1) generating the playback file by sequentially storing a loader for loading the player, the multimedia data, and the player for playing the multimedia data; and (A-2) executing the player using the loader, loading the multimedia data on the player, and playing the playback file.

In another aspect, a method of generating a playback file including a multimedia data, includes steps of: (D-1) selecting the multimedia data corresponding to a channel and a record time selected by a user; (D2) storing a loader in a storage unit according to a file format for the playback file; (D3) storing the multimedia data posterior to the loader; and (D-4) storing a player posterior to the multimedia data.

In another aspect, a method of playing a playback file including a loader, a multimedia data and a player, includes: (E-1) receiving an instruction of playing the playback file from a user; (E-2) executing the loader at a front portion of the playback file; (E-3) executing the player at an end portion of the playback file using the loader; and (E-4) playing the playback file by loading the multimedia data between the loader and the payer using the player.

In another aspect, a computer readable media comprising a program to: generate the playback file by sequentially storing a loader for loading the player, the multimedia data and the player for playing the multimedia data; and executing the player using the loader, loading the multimedia data on the player, and playing the playback file.

In another aspect, a digital video recorder (DVR) system storing an image data of at least one camera and providing the image data includes: an moving picture experts group (MPEG) encoder/decoder encoding the image data; a digital signature unit inserting a digital signature into the image data; a record task unit storing the image data including the digital signature as a multimedia data; a play task unit deciphering the digital signature of the multimedia data and decoding the multimedia data using the MPEG encoder/decoder to play the multimedia data, wherein after a file format and the multimedia data are selected according to a user's request for generating, the play task unit adds a loader prior to the multimedia data and a player posterior to the multimedia data to generate a playback file, and wherein the play task unit executes the player of the playback file through the loader according to a user's instruction of playing and loads the multimedia data on the player to play the playback file.

In another aspect, a digital video recorder (DVR) system storing an image data of at least one camera and providing the image data, includes a play task unit generating a playback file having: a loader loading a player according to an instruction of playing the playback file; at least one multimedia data stored in a file system; and the player playing the multimedia data.

In another aspect, an apparatus of playing a playback file including a multimedia data, wherein the play back file includes: the multimedia data; a player playing the multimedia data; and a loader executing the player.

### BRIEF DESCRIPTION OF THE DRAWINGS

The accompanying drawings, which are included to provide a further understanding of the invention and are incorporated in and constitute a part of this specification, illustrate embodiments of the invention.

FIG. 1 is a view showing a structure of a playback file according to the related art;

FIG. 2 is a view showing a monitoring system using a digital video recorder system according to an embodiment of the present invention;

FIG. 3 is a block diagram showing a DVR system according to another embodiment of the present invention;

FIG. 4 is a view showing a structure of a playback file according to an embodiment of the present invention;

FIG. 5 is a flow chart illustrating a method of generating a playback file according to an embodiment of the present invention;

FIG. 6 is a view illustrating a multimedia data in a method of generating a playback file according to an embodiment of the present invention;

FIG. 7 is a view showing changes in version of a player in a playback file according to an embodiment of the present invention; and

FIG. 8 is a flow chart illustrating a method of playing a playback file according to an embodiment of the present invention.

### DETAILED DESCRIPTION OF THE PREFERRED EMBODIMENTS

Reference will now be made in detail to embodiments which are illustrated in the accompanying drawings. Wherever possible, similar reference numbers will be used to refer to the same or similar parts.

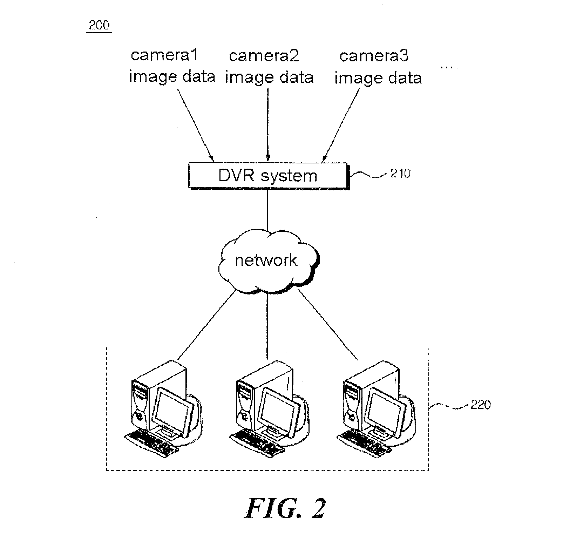

FIG. 2 is a view showing a monitoring system using a digital video recorder system according to an embodiment of the present invention.

In FIG. 2, a monitoring system 200 includes at least one camera, a digital video recorder (DVR) system 210 and at least one terminal 220. The at least one camera is coupled with the DVR system 210 through at least one channel (not shown). The at least one terminal 220 is coupled with the DVR system 210 through a network. In the monitoring system 200, an image is sensed by the at least one camera and converted into an image data. The sensed image may be displayed through a closed circuit television (CCTV) for a realtime monitoring and the image data may be stored in the DVR system 210 as a backup data. In addition, the image data in the DVR system 210 may be searched and inspected through the at least one terminal 220. To inspect the image data in the DVR system 210, for example, a user may instruct the DVR system 210 to search and play a requested image data through an input unit such as a keyboard and a mouse of the at least one terminal.

Specifically, a user may search and inspect the image data in the DVR system 210 using an application program in the DVR system 210 by access or an application program executed in the at least one terminal. Further, a user may generate a playback file of a new structure that is playable by itself without a separate player program. Although the image data in the DVR system 210 is illustrated as an example in the embodiment of FIG. 2, a method of generating and playing a playback file may be applied to all kinds of multimedia data including a video data and an audio data.

The playback file according to an embodiment of the present invention a structure where a loader, a multimedia data and a player are sequentially arranged. Accordingly, the loader is arranged prior to the multimedia data and the player is arranged posterior to the multimedia data. As a result, the player may be easily changed without movement of the multimedia data. To generate the playback file, a user may select a requested multimedia data and a requested format for the playback file and may instruct to store the loader, the multimedia data and the player sequentially through the input unit of the at least one terminal. For example, a channel of the at least one camera and a record time corresponding to the requested image data may be selected for generating a playback file of the requested image data in the DVR system 210.

The loader loading the player for the multimedia data includes information regarding version and size of the player. The loader may have a connection function of connecting with a server providing a player of the latest version. In addition, the loader may have an upgrade function of verifying the version of the player in the server and changing an established player into the player of the server when the player of the server has version higher than the established player.

The generated playback file may be stored in the DVR system 210 or a storage unit of the at least one terminal 220 such as a hard disk and may be played according to instruction of a user to select and play the playback file. For that purpose, a user selects a requested playback file and inputs the instruction of playing the selected playback file through the input unit of the at least one terminal. The loader of the playback file is executed according to the instruction of playing. First, the loader verifies the version of the player of the playback file. When the player of the playback file has an old version, the loader connects with the server through a network and upgrades the player. Accordingly, when the server has a player of the latest version, the loader changes the player of the old version into the player of the latest version. After the player is upgraded in case that the player of the playback file has the old version, or after the version of the player is verified in case that the player of the playback file has the latest version, the loader executes the player of the playback file. The executed player loads the multimedia data of the playback file and the multimedia data is provided to a user through a display unit and a sound unit of the at least one terminal 220.

Accordingly, the multimedia data in the storage unit of the DVR system 220 is executed using the playback file according to an embodiment of the present invention without a separate player. In addition, the player of the playback file is upgraded using the loader of the playback file. As a result, since the player is arranged posterior to the multimedia data in the playback file, the player is changed without re-generation of the whole playback file.

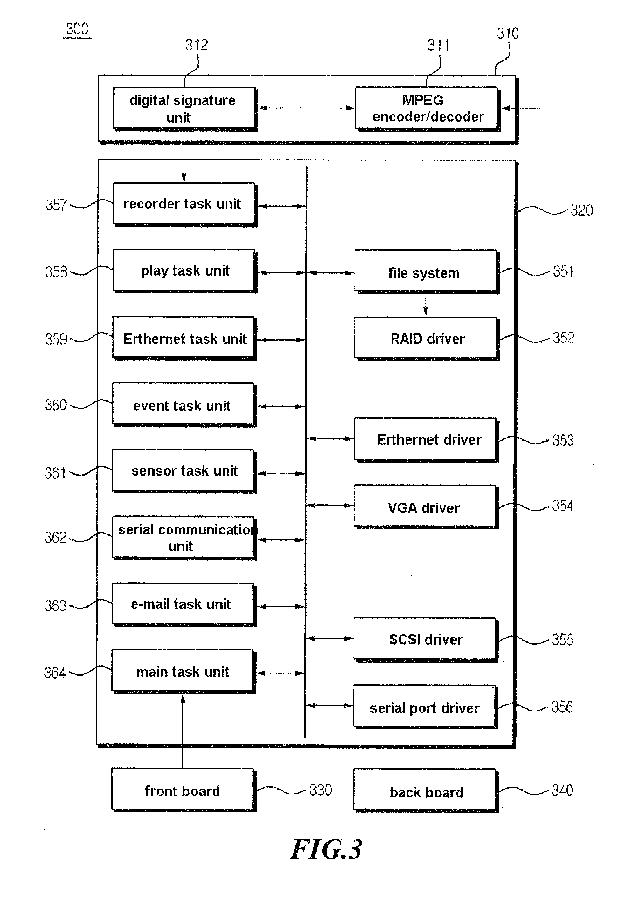

FIG. 3 is a block diagram showing a DVR system according to another embodiment of the present invention.

In FIG. 3, a DVR system 300 includes an encoding unit 310, a main board 320, a front board 330 and a back board 340. The encoding unit 310 includes an MPEG (moving picture experts group) encoder/decoder 311 and a digital signature unit 312. The MPEG encoder/decoder 311 receives an image data from at least one camera and encodes the image data. The image data may include a channel information and a record time information as well as an image information. The digital signature unit 213 inserts a digital signature into the encoded image data.

The main board 320 includes a file system 351, an RAID (redundant array of inexpensive disk) driver 352, an Ethernet driver 353, a VGA (video graphics adapter) driver 354, a SCSI (small computer system interface) driver 355, a serial port driver 356, a record task unit 357, a play task unit 358, a Ethernet task unit 360, a sense task unit 361, a serial communication task unit 362, an e-mail task unit 363 and a main task unit 364. The record task unit 357 processes the image data including the digital signature to correspond to a record time of the image data in the at least one camera, and the image data processed in the record task unit 357 is stored in the file system 351 as a multimedia data.

The RAID driver 352 provides functions to drive the file system 351 harmoniously. For example, a data may be divided and processed in parallel with a plurality of storage units in a file management system of an RAID type. As a result, a file management system of an RAID type has advantages in access speed and reliability of data conservation.

The play task unit 358 processes the multimedia data in the file system 351 to prepare for playing. According to a user's request for playing, the play task unit 358 reads out the multimedia data corresponding to the record time of the required camera in the file system 351. In addition, the play task unit 358 deciphers the digital signature of the read-out multimedia data and decodes the read-out multimedia data using the MPEG encoder/decoder 311. Further, when a user requests a generation of a backup file, the play task unit 358 may add a loader prior to the multimedia data and a player posterior to the multimedia data to generate a backup file having the same structure as the playback file. In another embodiment, the DVR system may include an additional backup task unit for generating a backup file.

The DVR system 300 may communicate with the at least one terminal 220 (of FIG. 2) through the Ethernet task unit 359. For example, the Ethernet task unit 359 may receive the instruction of playing the playback file of the multimedia data or may transmit an image and a sound generated by playing the playback file of the multimedia data. In addition, the Ethernet task unit 359 is driven by the Ethernet driver 353.

The event task unit 360 performs events with respect to the image data inputted from the at least one camera. For example, the event task unit 360 may conduct an event such as notification of the start of record and an alarm.

The sense task unit 361 senses heat and noise generated in the DVR system 300, thereby minimizing a physical deterioration of the image data in the DVR system 300. The serial communication task unit 362 provides functions to the DVR system 300 for communicating with the other unit coupled with the DVR system 300 through a serial interface. For example, the serial communication task unit 362 may include a USB (universal serial bus) port. The serial communication task unit 362 may store the multimedia data into an additional storage unit coupled with the DVR system 300 through a USB cable connected to the USB port and may read out a backup data in the additional storage unit. The serial communication task unit 362 is driven by the serial port driver 356. For example, when the DVR system 300 is coupled with a notebook computer of a user using a serial communication, the serial communication task unit 362 and the serial port driver 356 may provide functions to connect a serial interface of the notebook computer and the DVR system 300.

The e-mail task unit 363 may receive e-mails from an e-mail server or may transmit e-mails to the e-mail server. Further, the main task unit 364 supports the search for the multimedia data according a user's request inputted through the front board 330. In addition, the main task unit 364 supports a user interface relating to an image display such as an aspect ratio of a display unit as well as image controls such as brightness and contrast ratio. Moreover, the main task unit 364 supports several functions to recognize a whole management state of the DVR system 300.

The SCSI driver 355 provides a serial interface standard for connection with peripheral units. For example, the SCSI driver 355 may satisfy mechanic and electric conditions for connection of input/output bus and may be compatible with a standard for an instruction set of the peripheral units. Since an interface of a SCSI type prevents conflicts between units using unit numbers of the peripheral units, the SCSI driver 355 improves stability of the DVR system 300.

The VGA driver 354 processes the multimedia data to have a resolution corresponding to the display unit. The front board 330 provides a user interface relating to an image displayed on the display unit through the VGA driver 354. In addition, the front board 330 may provide function to control light emitting diodes (LEDs) indicating an input in a remote controller by a user, an input in a touch key by a user and operation states of units in the DVR system 300.

The back board 340 provides functions rarely used as compared with the functions provided by the front board 330. For example, the back board 340 may provide an operator interface by controlling a function for maintenance and repair such as replacement of boards and supporting changes in system environment.

A user remote from the DVR system 300 may search and inspect the multimedia data in the DVR system 300 using an application program managed in the file system 351 of the DVR system 300 or using an application program in the at least one terminal 220 (of FIG. 2). Specifically, the user may generate a playback file having a new structure that is playable by itself without a separate player program from the multimedia data in the DVR system 300 through the application program.

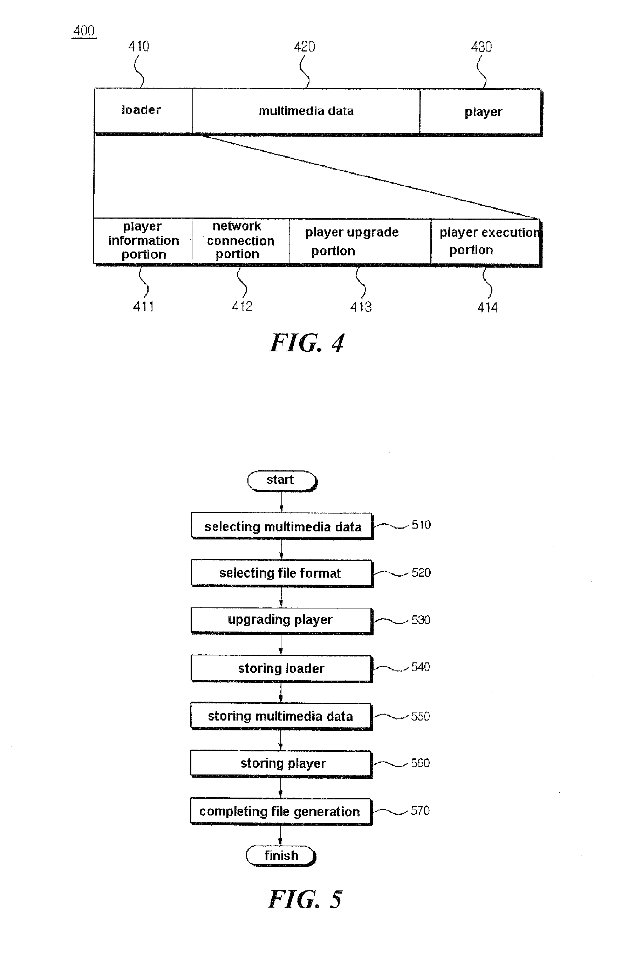

FIG. 4 is a view showing a structure of a playback file according to an embodiment of the present invention.

In FIG. 4, a playback file 400 includes a loader 410, a multimedia data 420 and a player 430 sequentially arranged. Accordingly, the multimedia data 420 is arranged posterior to the loader 410 and prior to the player 430. The loader 410 for loading the player 430 includes a player information portion 411, a network connection portion 412, a player upgrade portion 413 and a player execution portion 414. The player information portion 411 may include information on a size and a version of the player 430. The network connection portion 412 may provide a function to connect with a server providing a player of the latest version. The player upgrade portion 413 may compare the version of the player stored in the player information portion 411 and the latest version of the player provided by the server. In addition, the player upgrade portion 413 upgrades the player in the playback file 400 when the latest version of the player in the server is higher than the version of the player in the player information portion 411. The player execution portion 414 executes the player 430 of the playback file 400 in response to execution instruction of a user. While the player 430 is executed, the player 430 may provide outputs corresponding to the multimedia data 420 to a user using information on a player program for loading the multimedia data 420 on the player 430. The multimedia data 420 may include a video data or an audio data stored in the DVR system 300 and is outputted to a display unit or a speaker unit through the player 430 according to the execution instruction. Accordingly, the playback file 400 is played without a separate player program and a version of the player 430 is automatically upgraded. In addition, since the player 430 is arranged posterior to the multimedia data 420, a player of the latest version is easily utilized without movement of the multimedia data 420.

FIG. 5 is a flow chart illustrating a method of generating a playback file according to an embodiment of the present invention. A user remote from a DVR system 300 (of FIG. 3) may generate a playback file 400 (of FIG. 4) using an application program managed in a file system 351 (of FIG. 3) of the DVR system 300 by access or using an application program in the at least one terminal 220 (of FIG. 2). Alternatively, the playback file may be generated in a play task unit 358 (of FIG. 3) of the DVR system 300.

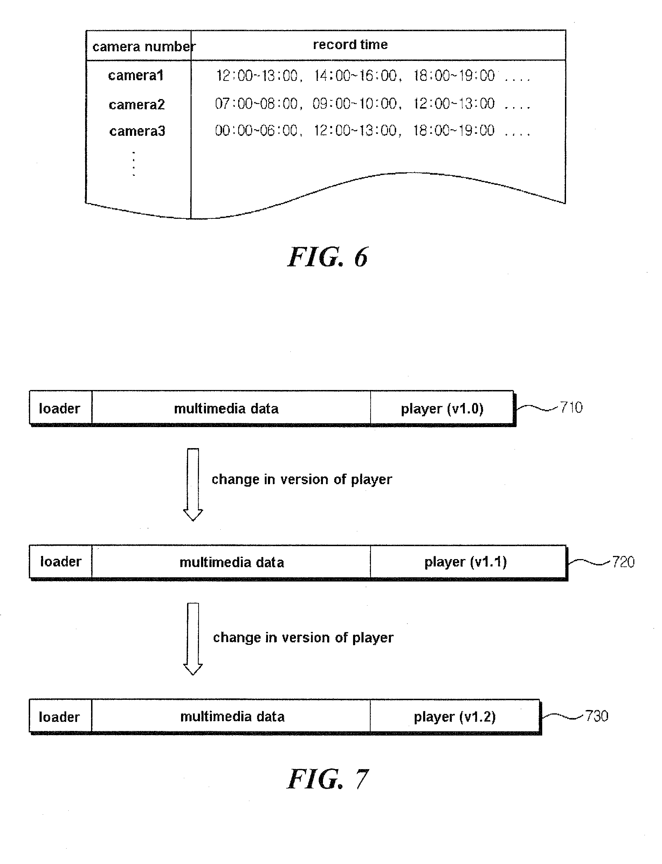

In a first step 510 of FIG. 5, a multimedia data in the DVR system 300 is selected for generating the playback file 400 by a user. The selected multimedia data may include a video data or an audio data stored in the DVR system 300. In addition, the selected multimedia data may have a compressed file having an extension such as mp3, avi and mpeg. Further, the DVR system 300 may select an adequate player compatible and playable with the selected multimedia data and an adequate loader including information on the player from a database for playing the selected multimedia data. When the multimedia data in the DVR system 300 is selected, a channel of a camera and a record time may be also selected so that data corresponding to the selected camera and the selected record time can be converted into the playback file 400. The first step 510 is illustrated in detail referring to FIG. 6.

FIG. 6 is a view illustrating a multimedia data in a method of generating a playback file according to an embodiment of the present invention.

In FIG. 6, before the playback file is generated, the DVR system 300 receives image data from at least one camera, for example, first, second and third cameras. In addition, a digital signature and a record time are inserted into the image data. The image data including the digital signature and the record time are stored in a file system 351 (of FIG. 3) of the DVR system 300 as multimedia data. For example, the multimedia data may have the image data recorded by the first camera from 12:00 to 13:00, from 14:00 to 16:00 and from 18:00 to 19:00. Similarly, the multimedia data may further have the image data recorded by the second camera from 07:00 to 08:00, from 09:00 to 10:00 and from 12:00 to 13:00, and the image data recorded by the third camera from 00:00 to 06:00, from 12:00 to 13:00 and from 18:00 to 19:00. Next, a user selects one of the multimedia data in the file system 351 for generating the playback file. The selected multimedia data includes the image data of the corresponding camera and the corresponding record time. Accordingly, a user may perform the first step 510 by selecting the desired camera and the desired record time. When a user wants to generate the playback file corresponding to the image data of the first camera and the record time of around 15:00, a user may select the multimedia data of the first camera and the record time of 14:00 to 16:00. As a result, the playback file may be generated from the multimedia data including the image data of the first camera and the record time of 14:00 to 16:00.

In a second step 520 of FIG. 5, a file format is selected. A user may select a file format necessary for a separate player such as a pw3 format. When a user selects the file format necessary for a separate player, the multimedia data except the loader and the player may be stored in the storage unit such as a hard disk in subsequent steps. When a user selects a file format playable without a separate player such as an exe format, the loader, the multimedia data and the player are sequentially stored in a storage unit in subsequent steps.

In a third step 530 of FIG. 5, the player is upgraded to have the latest version. For user's convenience, the player may be upgraded when the playback file is generated. Since the playback file supports a function to upgrade the version of the player, the player may be upgraded in a subsequent step instead of in the third step 530.

In a fourth step 540 of FIG. 5, when the format playable without a separate player is selected for the playback file, the loader for loading the player is stored in the storage unit.

Sequentially, in fifth and sixth steps 550 and 560 of FIG. 5, the selected multimedia data is stored posterior to the loader in the storage unit of the DVR system 300 and the player is stored posterior to the multimedia data in the storage unit of the DVR system 300.

As a result, in a seventh step of FIG. 5, the generation of the playback file including the loader, the multimedia data and the player arranged sequentially by the DVR system 300 is finished.

FIG. 7 is a view showing changes in version of a player in a playback file according to an embodiment of the present invention. In the playback file according to the related art, in order to change a version of the player in the playback file corresponding to the image data in the DVR system, the player is upgraded and then both the upgraded player and the multimedia data are stored again to generate a new playback file. In the playback file according to an embodiment of the present invention, however, only the player in the playback file is automatically upgraded using the playback file itself without re-storage of the upgraded player and the multimedia data.

In FIG. 7, the player is arranged at an end portion of the playback file. While the version of the player is changed from v1.0 to v1.2 through v1.1, only the player at the end portion of the playback file is upgraded without generation of a new playback file by re-storage of the multimedia data. Accordingly, when functions supported by the player such as codec, video control and sound equalizer are changed or added in the playback file, only the player may be upgraded without movement of the player and generation of a new playback file because the player is arranged at the end portion of the playback file.

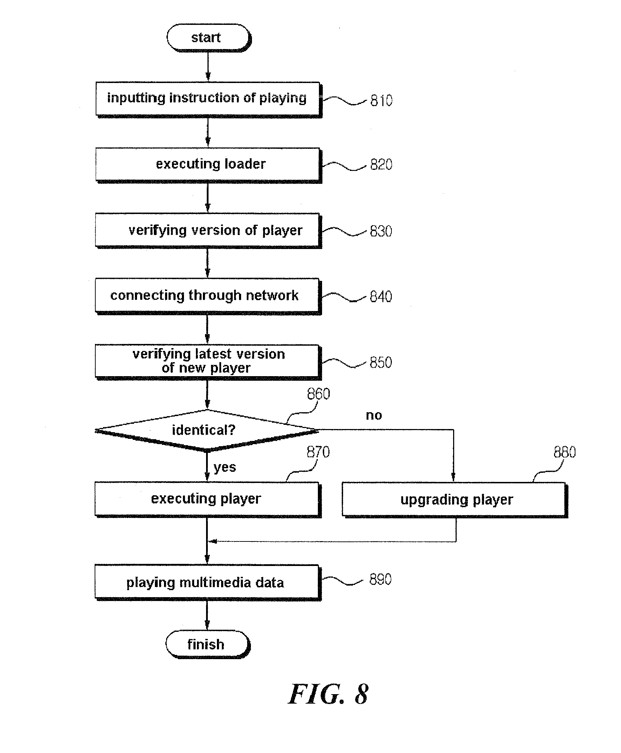

FIG. 8 is a flow chart illustrating a method of playing a playback file according to an embodiment of the present invention. The playback file may be played using the application program used in the generation of the playback file shown in FIG. 5. Accordingly, a user remote from a DVR system 300 (of FIG. 3) may play a playback file 400 (of FIG. 4) using an application program managed in a file system 351 (of FIG. 3) of the DVR system 300 by access or using an application program in the at least one terminal 220 (of FIG. 2). Alternatively, the playback file may be played in a play task unit 358 (of FIG. 3) of the DVR system 300.

In a first step 810 of FIG. 8, instruction of playing the playback file is inputted to the DVR system 300 by a user. In a second step 820 of FIG. 8, the loader at a front portion of the playback file is executed according to the instruction of playing the playback file. In a third step 830 of FIG. 8, a version of the player of the playback file in the DVR system 300 is verified using the loader. In a fourth step 840 of FIG. 8, the DVR system 300 is connected with a server through a network using the loader. The server includes a new player of the latest version, and provides the new player of the latest version to the DVR system 300 through the executed loader. In a fifth step 850 of FIG. 8, the loader receives the new player of the latest version and verifies the latest version of the new player received from the server. In a sixth step 860 of FIG. 8, the latest version of the new player received from the server is compared with the version of the player of the playback file in the DVR system 300. In a seventh step 870 of FIG. 8, when the latest version of the new player received from the server is identical with the version of the player of the playback file in the DVR system 300, the player of the playback file is executed by the loader. Moreover, in an eighth step 880 of FIG. 8, when the latest version of the new player received from the server is not identical with, i.e., is different from (higher than) the version of the player of the playback file in the DVR system 300, the loader downloads the new player of the latest version from the server and the player of the playback file is upgraded to be replaced with the new player of the latest version. In a ninth step 890 of FIG. 8, the multimedia data of the playback file is played by the upgraded player.

In the present invention, consequently, the player of the playback file is easily upgraded using the loader of the playback file even when the version of the player is changed. In addition, since the player is arranged posterior to the multimedia data, the player is easily upgraded without generation of a new playback file and movement of the player even when the version of the player is changed. Further, since the playback file is generated to include the loader prior to the multimedia data and the player posterior to the multimedia data, the multimedia data in the DVR system is easily played using the player of the latest version without re-generation of a new playback file. As a result, the present invention has advantages in file sharing and file management.

Embodiments of the present invention may include computer readable media including program instructions to implement various operations embodied by a computer. The media may also include, alone or in combination with the program instructions, data files, data structures, and the like. The media may be those specially designed and constructed for the purposes of the present invention, or may be of the kind well known and available to those skilled in the computer software arts. Examples of computer readable media include magnetic media such as hard disks, floppy disks, and magnetic tape; optical media such as CD-ROM (compact disk-read only memory) disks and DVD (digital video disk); magneto-optical media such as floptical disks; and hardware units that are specially configured to store and perform program instructions, such as read only memory (ROM), random access memory (RAM), flash memory, and the like. Examples of program instructions include both machine code, such as produced by a compiler, and advanced language code that may be executed by the computer using an interpreter.

It will be apparent to those skilled in the art that various modifications and variations can be made in a method of generating and playing a playback file and an apparatus using the same of the present invention without departing from the spirit or scope of the invention. Thus, it is intended that the present invention cover the modifications and variations of this invention provided they come within the scope of the appended claims and their equivalents.

## Claims

1. A method of generating and playing a playback file including a multimedia data and a player, comprising steps of:
(A-1) generating the playback file by sequentially storing a loader for loading the player, the multimedia data, and the player for playing the multimedia data; and
(A-2) executing the player using the loader, loading the multimedia data on the player, and playing the playback file.

2. The method according to claim 1, wherein the multimedia data is one of a video data and an audio data stored in a digital video recorder (DVR) system.

3. The method according to claim 1, wherein the step of (A-1) comprises steps of:
(B-1) selecting the multimedia data;
(B-2) selecting a file format; and
(B-3) when the file format is playable without a separate player, sequentially storing the loader, the multimedia data and the player in a storage unit to generate the playback file.

4. The method according to claim 3, wherein the step of (B-3) further comprises a step of: when the file format is necessary for a separate player, storing only the multimedia data in the storage unit to generate the playback file playable with the separate player.

5. The method according to claim 1, wherein the player is selected compatible with and is stored posterior to the multimedia data in the step of (A-1).

6. The method according to claim 1, wherein the loader comprises:
a player information portion including an information on a size and a version of the player;
a network connection portion connecting with a server providing a new player of a latest version;
a player upgrade portion upgrading the player of the playback file to have the latest version; and
a player execution portion executing the player of the playback file.

7. The method according to claim 6, wherein the player upgrade portion upgrades the player posterior to the multimedia data without movement of the player.

8. The method according to claim 1, wherein the step of (A-2) comprises:
(C-1) receiving an instruction of playing the playback file from a user;
(C-2) executing the loader according to the instruction of playing the playback file;
(C-3) verifying a version of the player in the playback file;
(C-4) connecting with a server providing a new player of a latest version;
(C-5) comparing the version of the player in the playback file and the latest version of the new player and upgrading the player of the playback file to have the latest version when the latest version of the new player is different from the version of the player of the playback file;
(C-6) executing the player of the playback file through the loader; and
(C-7) playing the playback file by loading the multimedia data on the player.

9. A method of generating a playback file including a multimedia data, comprising steps of:
(D-1) selecting the multimedia data corresponding to a channel and a record time selected by a user;
(D2) storing a loader in a storage unit according to a file format for the playback file;
(D3) storing the multimedia data posterior to the loader; and
(D-4) storing a player posterior to the multimedia data.

10. The method according to claim 9, further comprising a step of (D-5) selecting the player compatible with the multimedia data and the loader including an information on the player after the step of (D-1).

11. The method according to claim 9, wherein the loader connects with a server providing a new player of a latest version and upgrades the player of the playback file to have the latest version.

12. The method according to claim 9, wherein the loader includes information on a size and a version of the player and executes the player of the playback file.

13. A method of playing a playback file including a loader, a multimedia data and a player, comprising:
(E-1) receiving an instruction of playing the playback file from a user;
(E-2) executing the loader at a front portion of the playback file;
(E-3) executing the player at an end portion of the playback file using the loader; and
(E-4) playing the playback file by loading the multimedia data between the loader and the payer using the player.

14. The method according to claim 13, after the step of (E-2), further comprising steps of:
(E-5) verifying a version of the payer in the playback file;
(E-6) connecting with a server providing a new player of a latest version; and
(E-7) comparing the version of the player in the playback file and the latest version of the new player and upgrading the player of the playback file to have the latest version when the latest version of the new player is different from the version of the player in the playback file.

15. A computer readable media comprising a program to: generate the playback file by sequentially storing a loader for loading the player, the multimedia data and the player for playing the multimedia data; and executing the player using the loader, loading the multimedia data on the player, and playing the playback file.

16. A digital video recorder (DVR) system storing an image data of at least one camera and providing the image data, comprising:
an moving picture experts group (MPEG) encoder/decoder encoding the image data; a digital signature unit inserting a digital signature into the image data;
a record task unit storing the image data including the digital signature as a multimedia data;
a play task unit deciphering the digital signature of the multimedia data and decoding the multimedia data using the MPEG encoder/decoder to play the multimedia data,
wherein after a file format and the multimedia data are selected according to a user's request for generating, the play task unit adds a loader prior to the multimedia data and a player posterior to the multimedia data to generate a playback file, and
wherein the play task unit executes the player of the playback file through the loader according to a user's instruction of playing and loads the multimedia data on the player to play the playback file.

17. A digital video recorder (DVR) system storing an image data of at least one camera and providing the image data, comprising a play task unit generating a playback file having: a loader loading a player according to an instruction of playing the playback file; at least one multimedia data stored in a file system; and the player playing the multimedia data.

18. The DVR system according to claim 17, wherein the loader is stored at a front portion of the playback file, the at least one multimedia data is stored posterior to the loader, and the player is stored posterior to the multimedia data.

19. The DVR system according to claim 17, wherein the loader comprises:
a player information portion including an information on a size and a version of the player;
a network connection portion connecting with a server providing a new player of a latest version;
a player upgrade portion upgrading the player of the playback file to have the latest version; and
a player execution portion executing the player of the playback file.

20. The DVR system according to claim 17, wherein the loader executes the player of the playback file according to a user's instruction of playing and the player plays the multimedia data.

21. The DVR system according to claim 17, wherein the loader connects with a server providing a new player of a latest version, compares a version of the player in the playback file and the latest version of the new player and upgrades the player of the playback file to have the latest version when the latest version of the new player is different from the version of the player of the playback file.

22. The DVR system according to claim 17, further comprising a record task unit processing the image data of the at least one camera to correspond to a record time of the image data of the at least one camera and storing the image data corresponding to the record time in a file system as a multimedia data.

23. An apparatus of playing a playback file including a multimedia data, wherein the play back file comprises: the multimedia data; a player playing the multimedia data; and a loader executing the player.

24. The apparatus according to claim 23, wherein the load, the multimedia data and the player are sequentially stored in the playback file.

25. The apparatus according to claim 23, wherein the loader comprises:
a player information portion including an information on a size and a version of the player;
a network connection portion connecting with a server providing a new player of a latest version;
a player upgrade portion upgrading the player of the playback file to have the latest version; and
a player execution portion executing the player of the playback file.

26. The apparatus according to claim 23, wherein player execution portion of the loader executes the player, and the player plays the multimedia data.

27. The apparatus according to claim 23, wherein the loader connects with a server providing a new player of a latest version, compares a version of the player in the playback file and the latest version of the new player and upgrades the player of the playback file to have the latest version when the latest version of the new player is different from the version of the player of the playback file.
